# FASCICULE DE BREVET EUROPEEN

(11) **EP 3 390 165 B1**
(45) Date de publication et mention de la délivrance du brevet: **11.09.2019**
(21) Numéro de dépôt: 16815607.3
(22) Date de dépôt: 28.11.2016
(51) Int. Cl.: B60R 21/21, B60R 21/231

(54) **DISPOSITIF DE GARNISSAGE À AIRBAG INTÉGRÉ, POUR UN VÉHICULE**
TRIMMVORRICHTUNG MIT EINGEBAUTEM AIRBAG FÜR EIN KRAFTFAHRZEUG
TRIM DEVICE WITH BUILT-IN AIRBAG FOR A MOTOR VEHICLE

(30) Priorité: 17.12.2015 FR 1562679
(43) Date de publication de la demande: 24.10.2018
(73) Titulaire: PSA AUTOMOBILES S.A., 78300 Poissy (FR)
(72) Inventeur: VOITOT, Jean, 25250 Onans (FR); THIEL, Marc, 25400 Exincourt (FR); COMBEAU, Frederic, 25750 Desandans (FR); MARTIN, Philippe, 25200 Montbeliard (FR); COMBET, Fabrice, 70400 Hericourt (FR)
(86) Numéro de dépôt international: PCT/FR2016/053112
(87) Numéro de publication internationale: WO 2017/103368

(56) Documents cités:
- EP-A1- 2 617 606
- JP-A- 2010 247 800
- US-A1- 2006 061 073
- US-A1- 2009 039 623

## Description

L'invention concerne les dispositifs de garnissage qui équipent certains véhicules, éventuellement de type automobile, et auxquels sont solidarisés des dispositifs de sécurité à sac gonflable (ou « airbags »).

Certains véhicules, généralement de type automobile, comprennent des entrées de porte définies par une structure (généralement métallique) sur laquelle on vient fixer un dispositif de garnissage et une garniture d'habillage. Ce dispositif de garnissage comprend notamment une pièce de garnissage contre une partie de laquelle vient généralement s'appuyer un côté d'une banquette ou d'un siège. Cette pièce de garnissage constitue ainsi une espèce de prolongement latéral de la banquette ou du siège qui assure la finition entre la structure du véhicule, la garniture de la porte et la banquette ou le siège, tout en garantissant un confort pour le passager assis. Le document US2006061073 décrit un dispositif de garnissage comprenant une pièce de garnissage étant fixée à la structure du véhicule par l'intermédiaire de pattes d'une platine à proximité d'une entrée de porte et à laquelle est solidarisé un dispositif de sécurité à sac gonflable ladite pièce de garnissage comprend un premier logement renfermant ledit dispostif de sécurité à sac gonflable et ayant un premier côté à proximité duquel est solidarisée fixement une vis et un second logement à proximité d'un second côté dudit premier logement, opposé audit premier côté, et comprenant en outre une platine sdidarisée fixement audit dispositif de sécurité à sac gonflable et comprenant une première extrémité immobilisée dans ledit second logement et une seconde extrémité opposée à ladite première extrémité, comportant un trou traversé par ladite vis.

Dans certains véhicules, les pièces de garnissage servent également de support à un dispositif de sécurité à sac gonflable (ou airbag). La fixation de cet airbag se fait généralement au moyen de plusieurs vis et/ou écrous, ce qui induit un temps d'assemblage relativement long et des risques de dégradation des vis. En outre, ce mode de fixation induit une augmentation notable de l'encombrement de la pièce de garnissage et du poids du dispositif de garnissage. Il en résulte des coûts élevés.

L'invention a donc notamment pour but d'améliorer la situation.

Elle propose à cet effet un dispositif de garnissage comprenant une pièce de garnissage, d'une part, propre à être solidarisée à une structure d'un véhicule au voisinage d'une entrée de porte, et, d'autre part, à laquelle est solidarisé un dispositif de sécurité à sac gonflable (ou airbag). Ce dispositif de garnissage se caractérise par le fait :
- que sa pièce de garnissage comprend un premier logement logeant le dispositif de sécurité à sac gonflable et ayant un premier côté à proximité duquel est solidarisée fixement une vis, et un second logement à proximité d'un second côté du premier logement, opposé au premier côté, et
- qu'il comprend une platine solidarisée fixement au dispositif de sécurité à sac gonflable et comprenant une première extrémité immobilisée dans le second logement et une seconde extrémité opposée à la première extrémité, comportant un trou traversé par la vis, et solidarisée fixement à la pièce de garnissage par un écrou vissé sur cette vis.

Grâce à l'invention, le nombre de vissages à effectuer pour solidariser fixement un airbag à une pièce de garnissage est notablement réduit, et l'ergonomie du technicien assurant le montage est notablement améliorée.

Le dispositif de garnissage selon l'invention peut comporter d'autres caractéristiques qui peuvent être prises séparément ou en combinaison, et notamment :
- le second logement peut être défini derrière une partie d'une armature que comprend la pièce de garnissage autour du premier logement. Dans ce cas, la première extrémité de la platine peut être pliée en forme générale de L ou de S de sorte qu'une partie terminale qu'elle comprend soit immobilisée dans le second logement derrière l'armature après un entraînement en rotation de la platine qui est propre à induire la traversée de son trou par la vis de la pièce de garnissage ;
   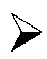 l'armature peut comprendre une partie transversale qui s'étend transversalement entre deux faces latérales de la pièce de garnissage, opposées entre elles, et qui est propre à immobiliser la partie terminale de la première extrémité de la platine dans le second logement ;
- le trou de la platine peut être oblong ;
- sa pièce de garnissage peut comprendre un logement traversant qui débouche au moins au niveau de deux faces latérales, opposées entre elles, et qui loge un cylindre propre à être traversé par une autre vis destinée à la solidariser fixement à la structure ;
   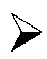 le second logement peut faire partie du logement traversant ;
- sa pièce de garnissage peut comprendre, sur une face latérale destinée à être orientée vers la structure, une protubérance qui comporte une première partie présentant une première largeur et une seconde partie prolongeant cette première partie et présentant une seconde largeur strictement supérieure à la première largeur. Dans ce cas, la seconde partie est destinée à traverser une première zone d'un trou défini dans la structure, et la première partie est propre à être translatée dans une seconde zone du trou, qui prolonge la première zone et présente une largeur strictement inférieure à celle de cette dernière, lors d'une phase de couplage de la pièce de garnissage à la structure.

L'invention propose également un véhicule, éventuellement de type automobile, et comprenant au moins une entrée de porte et au moins un dispositif de garnissage du type de celui présenté ci-avant et solidarisé à une structure au voisinage de l'entrée de porte.

On propose également un procédé d'assemblage d'un dispositif de garnissage selon l'invention destiné à être solidarisé à une structure d'un véhicule au voisinage d'une entrée de porte. Ce procédé se caractérise par le fait qu'il comprend :
- une première étape dans laquelle on solidarise fixement une platine à un dispositif de sécurité à sac gonflable, et
- une seconde étape dans laquelle on commence à introduire en biais le dispositif de sécurité à sac gonflable dans un premier logement d'une pièce de garnissage d'un dispositif de garnissage du type de celui présenté ci-avant, jusqu'à introduction d'une première extrémité de la platine dans un second logement défini dans la pièce de garnissage à proximité du premier logement, puis on entraîne en rotation le dispositif de sécurité à sac gonflable jusqu'à ce qu'un trou, défini dans une seconde extrémité de la platine, opposée à la première extrémité, soit traversé par une vis solidarisée fixement à la pièce de garnissage à proximité du premier logement, puis on visse un écrou sur la vis afin d'immobiliser le dispositif de sécurité à sac gonflable dans le premier logement.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, une partie d'un exemple de structure de véhicule, une partie d'un exemple de garniture de structure et un exemple de réalisation d'un dispositif de garnissage selon l'invention avant qu'ils ne soient solidarisés entre eux,
- la figure 2 illustre schématiquement, dans une vue en perspective, les principaux composants d'un exemple de réalisation d'un dispositif de garnissage selon l'invention avant qu'ils ne soient solidarisés entre eux,
- la figure 3 illustre schématiquement, dans une vue en perspective, l'ensemble constitué par solidarisation d'une platine à un dispositif de sécurité à sac gonflable du dispositif de garnissage de la figure 2,
- la figure 4 illustre schématiquement, dans une vue en perspective, le début du couplage de l'ensemble de la figure 3 à la pièce de garnissage du dispositif de garnissage de la figure 2,
- la figure 5 illustre schématiquement, dans une vue en perspective, la fin du couplage de l'ensemble de la figure 3 à la pièce de garnissage du dispositif de garnissage de la figure 2, juste avant le vissage final d'un écrou,
- la figure 6 illustre schématiquement, dans une vue en perspective, une partie de la structure de véhicule de la figure 1 avant le couplage du dispositif de garnissage de la figure 2,
- la figure 7 illustre schématiquement, dans une vue de face, le couplage de la partie supérieure du dispositif de garnissage de la figure 2 à la structure de véhicule de la figure 1, et
- la figure 8 illustre schématiquement, dans une vue en perspective, une partie inférieure du dispositif de garnissage de la figure 2 juste avant son vissage à la structure de véhicule de la figure 1.

L'invention a notamment pour but de proposer un dispositif de garnissage DG destiné à être solidarisé à une structure SV d'un véhicule au voisinage d'une entrée de porte, et comprenant un dispositif de sécurité à sac gonflable (ou airbag) intégré.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comprenant au moins une entrée de porte définie par une structure devant être équipée d'un dispositif de garnissage comprenant un airbag et à côté de laquelle est installé(e) une banquette ou un siège. Ainsi, l'invention concerne au moins les véhicules terrestres.

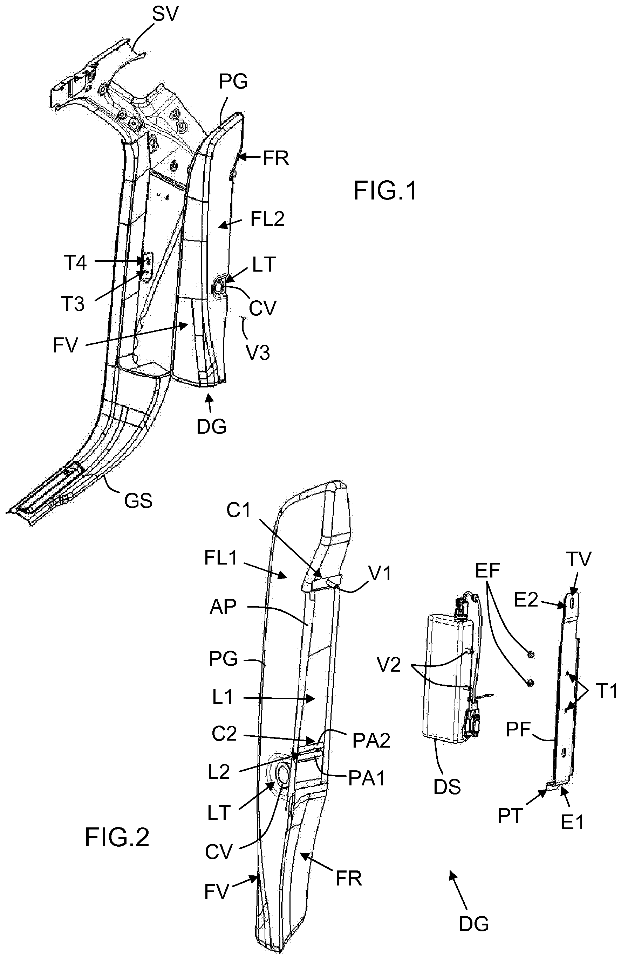

On a schématiquement représenté sur la figure 1 une partie d'un exemple de structure SV définissant une partie d'une entrée de porte d'un véhicule, une partie d'un exemple de garniture (d'habillage) de structure GS destinée à être solidarisée à cette structure SV, et un exemple de réalisation non limitatif d'un dispositif de garnissage DG selon l'invention, avant qu'ils ne soient solidarisés entre eux.

Une fois solidarisé fixement à la structure SV, le dispositif de garnissage DG sert d'appui à un côté d'une banquette ou d'un siège, et donc constitue une espèce de prolongement latéral de cette banquette ou de ce siège qui assure la finition entre la structure SV, la garniture de la porte et la banquette ou le siège, tout en garantissant un confort pour le passager assis.

Comme illustré non limitativement sur la figure 2 un dispositif de garnissage DG, selon l'invention, comprend une pièce de garnissage PG, un dispositif de sécurité à sac gonflable (ou airbag) DS et une platine PF.

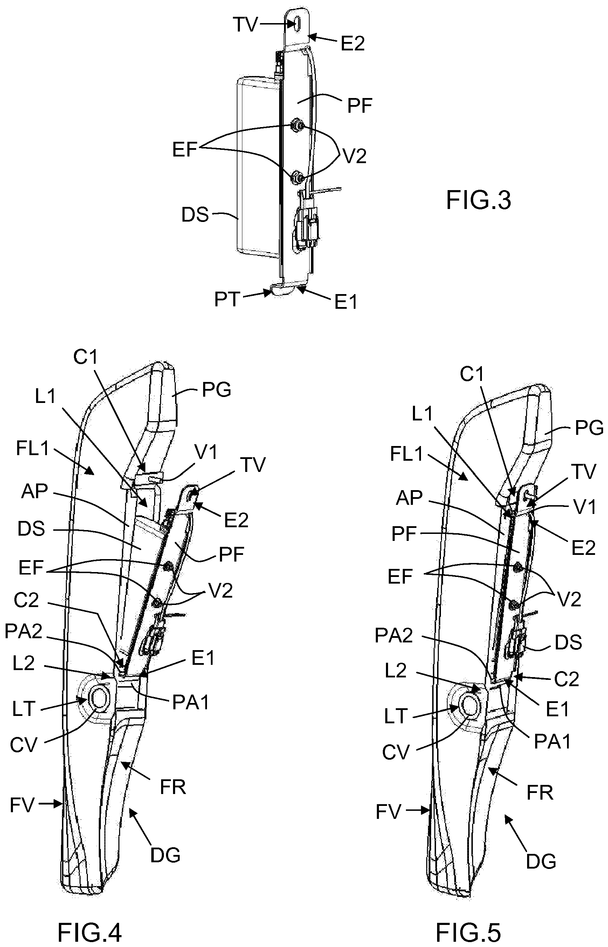

Comme illustré non limitativement sur les figures 3 à 5, la platine PF est solidarisée fixement au dispositif de sécurité à sac gonflable (ou airbag) DS. Cette solidarisation peut, par exemple et comme illustré, se faire par vissage. A cet effet, l'airbag DS peut comprendre deux vis V2 destinées à traverser respectivement deux trous T1 correspondants, définis dans une partie centrale de la platine PF, et à coopérer avec des écrous EF. Ces derniers (EF) assurent la solidarisation fixe de la platine PF à l'airbag DS via les vis V2 (voir figure 3).

La platine PF comprend également des première E1 et seconde E2 extrémités qui prolongent sa partie centrale, en étant opposées l'une à l'autre.

Par exemple, la platine PF peut être réalisée en métal ou dans un matériau plastique rigide et résistant au déploiement du sac gonflable.

La pièce de garnissage PG est propre à être solidarisée à la structure SV au voisinage d'une entrée de porte, et comprend des premier L1 et second L2 logements, comme illustré sur les figures 2, 4 et 5.

Elle peut, par exemple, être réalisée en mousse. Cette dernière peut être légèrement molle pour le confort des passagers. Par ailleurs, elle peut, par exemple, constituer un dormant, ou un bourrelet latéral amovible, ou un coussin latéral.

On notera, comme illustré non limitativement sur les figures 2, 4 et 5, que la mousse peut éventuellement mais avantageusement être solidarisée à une armature AP, par exemple métallique.

Le premier logement L1 est destiné à loger l'airbag DS. Il comprend notamment des premier C1 et second C2 côtés opposés entre eux. On notera que dans l'exemple illustré non limitativement sur les figures 2 à 5, le premier logement L1 présente une forme générale de parallélépipède rectangle. Dans ce cas, l'éventuelle armature AP encadre préférentiellement le premier logement L1, au moins.

Une vis V1, sur laquelle on reviendra plus loin, est solidarisée fixement à proximité du premier côté C1. Cette solidarisation fixe se fait de préférence sur une partie de l'éventuelle armature AP, située à proximité du premier côté C1.

Le second logement L2 est défini à proximité du second côté C2 du premier logement L1, et donc à l'opposé du premier côté C1 de ce dernier (L1).

Comme cela apparaît sur les figures 4 et 5, la première extrémité E1 de la platine PF est solidarisée fixement à l'airbag DS, et la seconde extrémité E2 de cette platine PF comporte un trou TV traversé par la vis V1 de la pièce de garnissage PG et est solidarisée fixement à cette dernière (PG) par un écrou vissé sur cette vis V1 (et non représenté sur la figure 5).

L'assemblage du dispositif de garnissage DG illustré sur la figure 2 peut se faire en mettant en oeuvre un procédé d'assemblage décrit ci-après et comprenant des première et seconde étapes.

Dans la première étape (du procédé), on solidarise fixement la platine PF à l'airbag DS, par exemple par vissage au moyen des deux vis V2 (traversant les deux trous T1) et des écrous EF, comme décrit précédemment. Le résultat de cette première étape est illustré sur la figure 3.

Dans la seconde étape (du procédé), on commence à introduire en biais l'airbag DS (solidarisé à la platine PF) dans le premier logement L1 de la pièce de garnissage PG du dispositif de garnissage DG décrit plus haut, jusqu'à introduction de la première extrémité E1 de la platine PF dans le second logement L2 défini dans la pièce de garnissage PG à proximité du premier logement L1. Le résultat de cette première partie de la seconde étape est illustré sur la figure 4.

Puis, on entraîne en rotation l'airbag DS (solidarisé à la platine PF) jusqu'à ce que le trou TV, défini dans la seconde extrémité E2 de la platine PF, opposée à la première extrémité E1, soit traversé par la vis V1 qui est solidarisée fixement à la pièce de garnissage PG à proximité du premier logement L1. Le résultat de cette deuxième partie de la seconde étape est illustré sur la figure 5.

Puis, on visse un écrou sur la vis V1 afin d'immobiliser l'airbag DS (solidarisé à la platine PF) dans le premier logement L1.

On dispose alors d'un dispositif de garnissage DG tout assemblé (du type de celui illustré sur la figure 1) et prêt à être solidarisé fixement à une structure SV d'un véhicule.

On notera que lorsque le second logement L2 est défini derrière une partie d'une armature AP de la pièce de garnissage PG, installée autour du premier logement L1, la première extrémité E1 de la platine PF peut, comme illustré non limitativement sur les figures 2 à 4, être pliée en forme générale de L ou de S. Ainsi, une partie terminale PT de cette première extrémité E1 peut être introduite dans le second logement L2 derrière l'armature AP et immobilisée dans ce second logement L2 après l'entraînement en rotation de la platine PF qui est destiné à induire la traversée du trou TV de sa seconde extrémité E2 par la vis V1 de la pièce de garnissage PG. Ce type d'immobilisation est parfois appelé « empiochage » par l'homme de l'art.

Comme illustré non limitativement sur les figures 2 à 4, c'est l'armature AP qui peut assurer cette immobilisation. Pour ce faire, elle peut comprendre une partie transversale PA1 qui s'étend transversalement entre deux faces latérales FLj (j = 1 ou 2) de la pièce de garnissage PG, opposées entre elles, et qui est propre à immobiliser la partie terminale PT de la première extrémité E1 de la platine PF dans le second logement L2. On comprendra qu'une fois la partie terminale PT passée derrière cette partie transversale PA1, elle se retrouve immobilisée.

Les deux faces latérales FL1 et FL2 sont celles qui sont destinées à être orientées respectivement vers la structure SV et vers la banquette (ou le siège). Elles sont donc approximativement perpendiculaires aux faces avant FV et arrière FR de la pièce de garnissage PG qui sont destinées à être orientées respectivement vers l'avant et l'arrière du véhicule. La face arrière FR est ouverte pour permettre l'accès aux premier L1 et second L2 logements.

La face latérale FL1 est, de préférence, en partie ouverte, au moins au niveau du premier logement L1 afin de faciliter l'expansion du sac gonflable en cas de choc, par exemple grâce à une couture affaiblie de par sa confection et un textile entourant l'air bag pour diriger l'expansion du sac dans la direction protégeant le passager.

Afin d'éviter que la partie terminale PT sorte du second logement L2 pendant l'entraînement en rotation, l'armature AP peut, comme illustré non limitativement sur les figures 2 à 5, comprendre une autre partie transversale PA2 qui s'étend transversalement entre les deux faces latérales FLj de la pièce de garnissage PG à proximité de la partie transversale PA1. On comprendra qu'ainsi la partie intermédiaire de la première extrémité E1, qui relie la partie terminale PT à la partie centrale de la platine PF, se retrouve interdite de se translater (au jeu près) suivant la direction joignant les premier C1 et second C2 côtés.

On notera également, comme illustré non limitativement sur les figures 2 à 5, que le trou TV de la seconde extrémité E2 peut être avantageusement oblong. Cela permet en effet d'offrir un degré de liberté de positionnement de la vis V1 dans le trou TV en fin d'entraînement en rotation de la platine PF, afin de tenir compte des tolérances de fabrication et des jeux et de permettre de s'affranchir de la longueur de la vis V1.

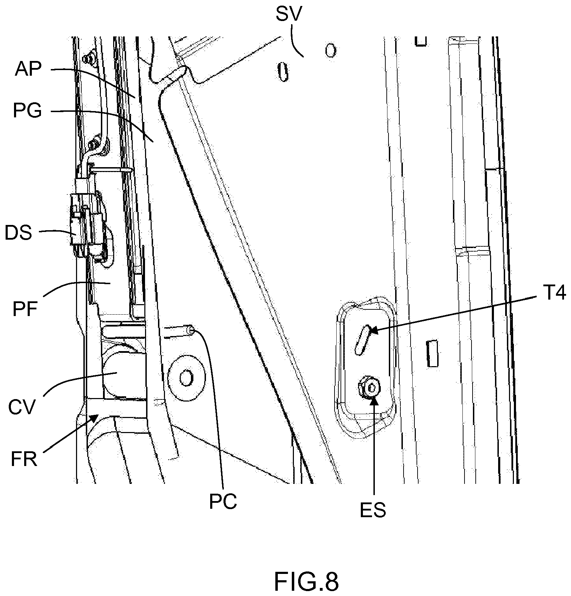

On notera également, comme illustré non limitativement sur les figures 1, 2, 5 et 8, que la pièce de garnissage PG peut comprendre un logement traversant LT débouchant au moins au niveau de ses deux faces latérales FLj (opposées entre elles) et logeant un cylindre CV propre à être traversé par une autre vis V3 destinée à la solidariser fixement à la structure SV. Ce cylindre CV est une pièce rigide traversant la pièce de garnissage PG afin d'éviter avantageusement qu'elle soit endommagée par la vis V3 lors de son vissage à un écrou ES placé derrière la structure SV (voir figure 8) et accessible via un trou T3 défini dans cette dernière (SV) (voir figure 1). On notera que pour faciliter le vissage de la vis V3, l'écrou ES est préalablement solidarisé fixement à la structure SV, par exemple par soudage.

Par exemple, et comme illustré non limitativement sur les figures 2, 4 et 5, le second logement L2 peut faire partie du logement traversant LT qui loge également le cylindre CV.

Afin de faciliter la solidarisation du dispositif de garnissage DG à la structure SV, la pièce de garnissage PG peut comprendre une protubérance PR de couplage sur sa face latérale FL1 (destinée à être orientée vers la structure SV).

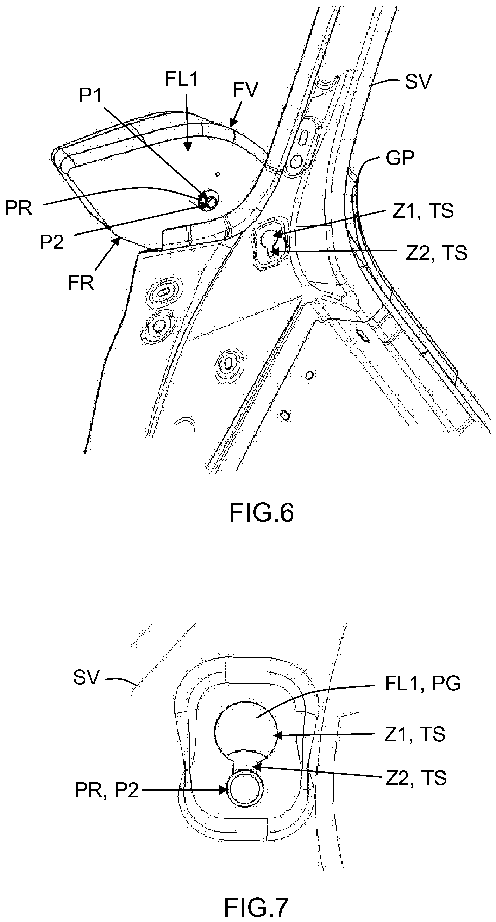

Comme illustré non limitativement sur les figures 6 et 7, cette protubérance PR comprend des première P1 et seconde P2 parties qui se prolongent et qui présentent respectivement des première et seconde largeurs, la seconde largeur étant strictement supérieure à la première largeur. Dans ce cas, la seconde partie P2 est destinée à traverser une première zone Z1 d'un trou TS qui est défini dans la structure SV, et la première partie P1 est propre à être translatée dans une seconde zone Z2 du trou TS, qui prolonge la première zone Z1 et présente une largeur strictement inférieure à celle de cette dernière (Z1), lors d'une phase de couplage de la pièce de garnissage PG à la structure SV. On comprendra que pour coupler la pièce de garnissage PG à la structure SV, avant de procéder au vissage de la vis V3 dans l'écrou ES, on commence par faire passer la seconde partie P2 de la protubérance PR au travers de la première zone Z1 du trou TS, afin qu'elle se retrouve placée derrière la partie de la structure SV qui comprend ce dernier (TS). Puis, on translate la pièce de garnissage PG par rapport à la structure SV, afin de translater la première partie P1 de la protubérance PR au travers de la seconde zone Z2 du trou TS. Le dispositif de garnissage DG est alors couplé à la structure SV (voir figure 7).

Ensuite, on rapproche de la structure SV la partie de la pièce de garnissage PG qui contient le cylindre CV jusqu'à ce que le trou de ce dernier (CV) se retrouve placé devant le trou T3 correspondant défini dans la structure SV (voir figure 8). Puis, on introduit une vis V3 dans le cylindre CV, du côté de la face latérale FL2 de la pièce de garnissage PG, et l'on visse cette vis V3 dans l'écrou ES placé derrière ce trou T3. Le dispositif de garnissage DG est alors solidarisé fixement à la structure SV.

On notera que pour faciliter le positionnement du trou du cylindre CV devant le trou T3, la pièce de garnissage PG peut comprendre un pion de centrage PC saillant du côté de la face latérale FL1, à une petite distance du cylindre CV. Ce pion de centrage PC est destiné à être placé dans un trou oblong T4 défini dans la structure SV à une petite distance du trou T3 et donc de l'écrou ES. On comprendra que lorsque le pion de centrage PC est logé dans le trou oblong T4, on est certain que le trou du cylindre CV est bien positionné suivant au moins une direction de l'espace par rapport au trou T3 de la structure SV. Le caractère oblong du trou T4 permet alors un rattrapage de position de la pièce de garnissage PG suivant une autre direction de l'espace (sensiblement perpendiculaire à celle précitée), lors de l'introduction de la vis V3 dans le trou T3 en vue de son vissage dans l'écrou ES. Cela permet de maintenir par gravité la pièce de garnissage PG devant le trou T3 sans que le technicien ait besoin de la tenir.

On notera également que dans l'exemple de réalisation illustré non limitativement sur les figures, le second logement L2 est défini sous le premier logement L1, et donc la première extrémité E1 de la platine PF peut être considérée comme une extrémité inférieure et la seconde extrémité E2 de cette platine PF comme une extrémité supérieure. Mais dans une variante de réalisation, le second logement L2 pourrait être défini au-dessus du premier logement L1, et dans ce cas la première extrémité E1 de la platine PF peut être considérée comme une extrémité supérieure et la seconde extrémité E2 de cette platine PF comme une extrémité inférieure. Dans d'autres variantes de réalisation, le second logement L2 pourrait être défini à droite ou à gauche du premier logement L1, ce qui implique un positionnement sensiblement perpendiculaire à celui illustré et nécessite une distance notablement plus importante entre les faces latérales FLj et que la platine PF puisse être assemblée à la pièce de garnissage PG d'un côté et de l'autre du véhicule.

L'invention permet de réduire notablement le nombre de vissages devant être effectués par un technicien pour solidariser fixement un airbag à une pièce de garnissage. Il en résulte une réduction des coûts de fabrication (du fait d'une réduction de matière, du temps de montage et du conditionnement), et une amélioration de l'ergonomie du technicien assurant l'assemblage, sans réduction de la protection des passagers.

## Revendications

1. Dispositif de garnissage (DG) comprenant une pièce de garnissage (PG) propre à être solidarisée à une structure (SV) d'un véhicule au voisinage d'une entrée de porte et à laquelle est solidarisé un dispositif de sécurité à sac gonflable (DS), ladite pièce de garnissage (PG) comprenant un premier logement (L1) logeant ledit dispositif de sécurité à sac gonflable (DS) et ayant un premier côté (C1) à proximité duquel est solidarisée fixement une vis (V1), et un second logement (L2) à proximité d'un second côté (C2) dudit premier logement (L1), opposé audit premier côté (C1), et comprenant en outre une platine (PF) solidarisée fixement audit dispositif de sécurité à sac gonflable (DS) et comprenant une première extrémité (E1) immobilisée dans ledit second logement (L2) et une seconde extrémité (E2) opposée à ladite première extrémité (E1), comportant un trou (TV) traversé par ladite vis (V1), et solidarisée fixement à ladite pièce de garnissage (PG) par un écrou vissé sur ladite vis (V1), **caractérisé en ce que** ledit dispositif comprend en outre un logement traversant (LT) débouchant au moins au niveau de deux faces latérales (FLj) de ladite pièce de garnissage (PG), opposées entre elles, et logeant un cylindre (CV) propre à être traversé par une autre vis (V3) destinée à la solidariser fixement à ladite structure (SV), et **en ce que** ledit second logement (L2) fait partie dudit logement traversant (LT).

2. Dispositif selon la revendication 1, **caractérisé en ce que** ledit second logement (L2) est défini derrière une partie d'une armature (AP) que comprend ladite pièce de garnissage (PG) autour dudit premier logement (L1), et **en ce que** ladite première extrémité (E1) est pliée en forme générale de L ou de S de sorte qu'une partie terminale (PT) soit immobilisée dans ledit second logement (L2) derrière ladite armature (AP) après un entraînement en rotation de ladite platine (PF) propre à induire la traversée de son trou (TV) par ladite vis (V1).

3. Dispositif selon la revendication 2, **caractérisé en ce que** ladite armature (AP) comprend une partie transversale (PA1) s'étendant transversalement entre deux faces latérales (FLj) de ladite pièce de garnissage (PG), opposées entre elles, et propre à immobiliser ladite partie terminale (PT) de la première extrémité (E1) de ladite platine (PF) dans ledit second logement (L2).

4. Dispositif selon l'une des revendications 1 à 3, **caractérisé en ce que** ledit trou (TV) est oblong.

5. Dispositif selon l'une des revendications 1 à 4, **caractérisé en ce que** ladite pièce de garnissage (PG) comprend, sur une face latérale (FL1) destinée à être orientée vers ladite structure (SV), une protubérance (PR) comportant une première partie (P1) présentant une première largeur et une seconde partie (P2) prolongeant ladite première partie (P1) et présentant une seconde largeur strictement supérieure à ladite première largeur, ladite seconde partie (P2) étant destinée à traverser une première zone (Z1) d'un trou (TS) défini dans ladite structure (SV), et ladite première partie (P1) étant propre à être translatée dans une seconde zone (Z2) dudit trou (TS), qui prolonge ladite première zone (Z1) et présente une largeur strictement inférieure à celle de cette dernière (Z1), lors d'une phase de couplage de ladite pièce de garnissage (PG) à ladite structure (SV).

6. Véhicule comprenant au moins une entrée de porte, **caractérisé en ce qu'**il comprend en outre au moins un dispositif de garnissage (DG) selon l'une des revendications précédentes, solidarisé à une structure (SV) au voisinage de ladite entrée de porte.

## Patentansprüche

1. Trimmvorrichtung (DG), die ein Trimmteil (PG) umfasst, das geeignet ist, fest mit einer Struktur (SV) eines Fahrzeugs in der Nähe eines Türeingangs verbunden zu sein, und mit dem eine Sicherheitsvorrichtung mit aufblasbarem Sack (DS) fest verbunden ist, wobei das Trimmteil (PG) eine erste Aufnahme (L1) umfasst, die die Sicherheitsvorrichtung mit aufblasbaren Sack (DS) aufnimmt und eine erste Seite (C1) aufweist, in deren Nähe eine Schraube (V1) stationär fest verbunden ist, und eine zweite Aufnahme (L2) in der Nähe eine zweiten Seite (C2) der ersten Aufnahme (L1), die der ersten Seite (C1) entgegengesetzt ist und außerdem eine Platte (PF), die stationär fest mit der Sicherheitsvorrichtung mit aufblasbarem Sack (DS) starr verbunden ist und ein erstes Ende (E1) umfasst, das in der zweiten Aufnahme (L2) stillgestellt ist, und ein zweites Ende (E2), das dem ersten Ende (E1) entgegengesetzt ist, das ein Loch (TV) umfasst, das von der Schraube (V1) durchquert wird und stationär fest mit dem Trimmteil (PG) durch eine Mutter verbunden ist, die auf die Schraube (V1) geschraubt ist, **dadurch gekennzeichnet, dass** die Vorrichtung außerdem eine durchquerende Aufnahme (LT) umfasst, die mindestens im Bereich von zwei Seitenflächen (FLj) des Trimmteils (PG), die einander entgegengesetzt sind, mündet und einen Zylinder (CV) aufnimmt, der geeignet ist, von einer anderen Schraube (V3), die dazu bestimmt ist, die Struktur (SV) stationär fest an der Struktur zu verbinden, durchquert zu werden, und dass die zweite Aufnahme (L2) Teil der durchquerende Aufnahme (LT) ist.

2. Vorrichtung nach Anspruch 1, **dadurch gekennzeichnet, dass** die zweite Aufnahme (L2) hinter einem Teil einer Bewehrung (AP), die in dem Trimmteil (PG) enthalten ist, um die erste Aufnahme (L1) definiert ist, und dass das erste Ende (E1) in allgemeiner L- oder S-Form derart geformt ist, dass ein Endteil (PT) in der zweiten Aufnahme (L2) hinter der Bewehrung (AP) nach einem Antreiben in Drehung der Platte (PF), die geeignet ist, das Durchqueren ihres Lochs (TV) durch die Schraube (V1) einzuleiten, stillgestellt ist.

3. Vorrichtung nach Anspruch 2, **dadurch gekennzeichnet, dass** die Bewehrung (AP) einen Querteil (PA1) umfasst, der sich quer zwischen zwei Seitenflächen (FLj) des Trimmteils (PG) einander entgegengesetzt erstreckt und geeignet ist, den Endteil (PT) des ersten Teils (E1) der Platte (PF) in der zweiten Aufnahme (L2) stillzustellen.

4. Vorrichtung nach einem der Ansprüche 1 bis 3, **dadurch gekennzeichnet, dass** das Loch (TV) länglich ist.

5. Vorrichtung nach einem der Ansprüche 1 bis 4, **dadurch gekennzeichnet, dass** das Trimmteil (PG) auf einer Seitenfläche (FL1), die dazu bestimmt ist, zu der Struktur (SV) ausgerichtet zu sein, eine Ausstülpung (PR) umfasst, die einen ersten Teil (P1) umfasst, der eine erste Breite aufweist, und einen zweiten Teil (P2), der den ersten Teil (P1) verlängert und eine zweite Breite aufweist, die strikt größer ist als die erste Breite, wobei der zweite Teil (P2) dazu bestimmt ist, eine Zone (Z1) eines Lochs (TS), das in der Struktur (SV) definiert ist, zu durchqueren, wobei der erste Teil (P1) geeignet ist, in eine zweite Zone (Z2) des Lochs (TS), die die erste Zone (Z1) verlängert und eine Breite aufweist, die strikt kleiner ist als die dieser letzteren Zone (Z1), bei einer Kopplungsphase das Trimmteils (PG) mit der Struktur (SV) verlagert zu werden.

6. Fahrzeug, das mindestens eine Eingangstür umfasst, **dadurch gekennzeichnet, dass** es außerdem mindestens eine Trimmvorrichtung (DG) nach einem der vorstehenden Ansprüche umfasst, die fest mit einer Struktur (SV) in der Nähe der Tür verbunden ist.

## Claims

1. A trim device (DG) including a trim part (PG) suitable for being secured to a structure (SV) of a vehicle in the vicinity of a door entrance and to which an airbag safety device (DS) is secured, said trim part (PG) including a first housing (L1) housing said airbag safety device (DS) and having a first side (C1) close to which a screw (V1) is fixedly secured, and a second housing (L2) close to a second side (C2) of said first housing (L1), opposite said first side (C1) and further including a plate (PF) fixedly secured to said airbag safety device (DS) and including a first end (E1) locked within said second housing (L2) and a second end (E2) opposite said first end (E1), comprising a hole (TV) passed through by said screw (V1), and fixedly secured to said trim part (PG) by a nut screwed on said screw (V1), **characterized in that** said device further includes a traversing housing (LT) opening at least at the level of two lateral faces (FLj) of said trim part (PG), opposite one another, and housing a cylinder (CV) suitable to be passed through by another screw (V3) intended to fixedly secure it to said structure (SV), and **in that** said second housing (L2) forms part of said traversing housing (LT).

2. The device according to Claim 1, **characterized in that** said second housing (L2) is defined behind a portion of a frame (AP) which said trim part (PG) includes around said first housing (L1), and **in that** said first end (E1) is bent in a general L or S shape so that a terminal portion (PT) is locked in said second housing (L2) behind said frame (AP) after a driving in rotation of said plate (PF) suitable to cause the passing through of its hole (TV) by said screw (V1).

3. The device according to Claim 2, **characterized in that** said frame (AP) includes a transverse portion (PA1) extending transversely between two lateral faces (FLj) of said trim part (PG), opposite one another, and suitable to lock said terminal portion (PT) of the first end (E1) of said plate (PF) in said second housing (L2).

4. The device according to one of Claims 1 to 3, **characterized in that** said hole (TV) is oblong.

5. The device according to one of Claims 1 to 4, **characterized in that** said trim part (PG) includes, on a lateral face (FL1) intended to be oriented towards said structure (SV), a protuberance (PR) comprising a first portion (P1) having a first width and a second portion (P2) extending said first portion (P1) and having a second width strictly greater than said first width, said second portion (P2) being intended to pass through a first zone (Z1) of a hole (TS) defined in said structure (SV), and said first portion (P1) being suitable to be translated in a second zone (Z2) of said hole (TS), which extends said first zone (Z1) and has a width strictly less than that of this latter (Z1), during a coupling phase of said trim part (PG) to said structure (SV).

6. A vehicle including at least one door entrance, **characterized in that** it further includes at least one trim device (DG) according to one of the preceding claims, secured to a structure (SV) in the vicinity of said door entrance.
